# EUROPÄISCHE PATENTSCHRIFT

(11) **EP 1 294 594 B1**
(45) Veröffentlichungstag und Bekanntmachung des Hinweises auf die Patenterteilung: **27.10.2004**
(21) Anmeldenummer: 01951630.1
(22) Anmeldetag: 23.06.2001
(51) Int. Cl.: B60R 25/02, F16D 7/02, B23P 11/00, B21D 39/04

(54) **ÜBERLASTSICHERUNG UND EIN VERFAHREN ZU DEREN HERSTELLUNG**
OVERLOAD SAFETY DEVICE AND METHOD FOR THE PRODUCTION THEREOF
LIMITEUR DE CHARGE ET SON PROCEDE DE PRODUCTION

(30) Priorität: 30.06.2000 DE 10031902
(43) Veröffentlichungstag der Anmeldung: 26.03.2003
(73) Patentinhaber: DaimlerChrysler AG, 70567 Stuttgart (DE)
(72) Erfinder: BATTERMANN, Jens, 71263 Weil der Stadt (DE); GÄRTNER, Stephan, 22589 Hamburg (DE); HARMS, Torsten, 21129 Hamburg (DE); HÄRTEL, Jörg, 21629 Neu Wulmstorf (DE); HEBENSTREIT, Axel, 70193 Stuttgart (DE); KIRCHNER, Torsten, 21255 Tostedt (DE); KITTLER, Holger, 20357 Hamburg (DE); LOX, Hanno, 25335 Elmshorn (DE)
(74) Vertreter: Brückner, Ingo, Dipl.-Ing.
(86) Internationale Anmeldenummer: PCT/EP2001/007155
(87) Internationale Veröffentlichungsnummer: WO 2002/002377

(56) Entgegenhaltungen:
- DE-A- 3 435 084
- FR-A- 2 724 469
- GB-A- 2 298 837
- US-A- 4 635 333
- US-A- 4 854 141
- US-A- 5 937 500

## Beschreibung

Die Erfindung betrifft eine Überlastsicherung nach dem Patentanspruch 1 und ein Verfahren zu deren Herstellung nach dem Patentanspruch 6.

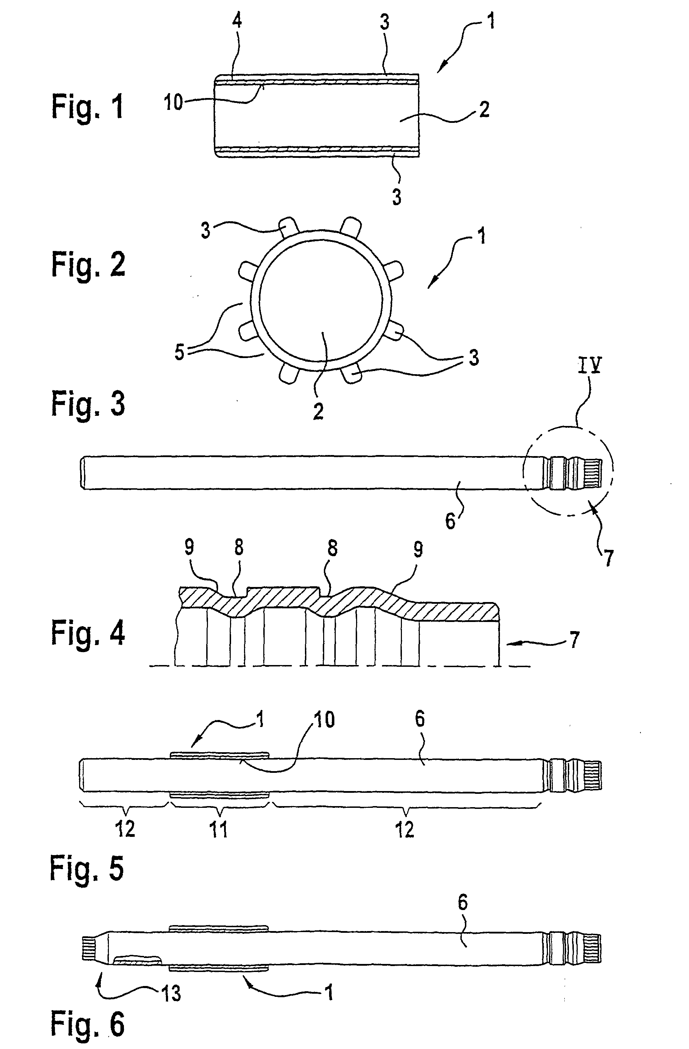

Eine Überlastsicherung der gattungsgemäßen Bauart bzw. ein Verfahren zu deren Herstellung ist aus der EP 0 569 269 A1 bekannt. Hierbei wird auf eine das innere zylindrische Fügeteil darstellende Lenkspindel ein das äußere Fügeteil bildender Schließring aufgeschoben, der mit einem Schließbolzen eines Lenkradschlosses zur Vermeidung einer unbefugten Benutzung des Kraftfahrzeuges zusammenwirkt. Zwischen dem inneren Fügeteil und dem äußeren Fügeteil ist zumindest ein Reibungsring angeordnet, welcher sich einerseits am inneren Fügeteil und andererseits am äußeren Fügeteil abstützt. Zur Haltgebung des Reibungsringes weist das innere Fügeteil (Fig. 2) eine umlaufende Nut auf, in der der Ring aufgenommen ist. Eine andere Möglichkeit wird durch das Beispiel von Fig. 3 oder Fig. 4 wiedergegeben, in dem das äußere Fügeteil am Innenumfang eine Freidrehung aufweist, welche den Reibungsring aufnimmt. Der Reibungsring ist elastisch ausgebildet und erzeugt zwischen den beiden Fügeteilen einerseits einen Reibschluß und andererseits einen Toleranzausgleich bei Unebenmäßigkeiten der beiden Fügeteile. Der Reibschluß ist derart ausgebildet, daß dem Drehmoment der Lenkspindel bei Eingriff des Schließbolzens in den Schließring ein Gegendrehmoment über den Schließring entgegengebracht wirkt, so daß der Drehung der Lenkspindel und damit des Lenkrades ein hoher Widerstand entgegengebracht wird, wodurch die Drehung des Lenkrades sehr schwergängig ausfällt und daher eine sichere Fahrzeugführerschaft während des Fahrens unmöglich macht. Bei Übersteigen eines bestimmten Drehmomentwertes löst sich der Reibschluß, so daß die Lenkspindel im Schließring durchrutscht, wodurch eine Deformierung oder Bruch der Lenkspindel verhindert wird. Bei dem bekannten Verfahren ist nachteilig, daß beim Zusammenschieben der beiden Fügeteile aufeinander der an einem der beiden Fügeteile montierte Reibungsring durch den beim Aufschieben schon entstehenden Reibschluß und den damit und durch die Schiebebewegung verbundenen axialen Zug verquetscht wird und beschädigt werden kann. Zudem wird dabei eine unerwünscht hohe Vorspannkraft des Reibungsringes erzeugt, so daß der Drehmomentwert, über dem das Fügesystem durchrutschen soll, unzulässig und unkontrolliert erhöht wird. Des weiteren ist der Bearbeitungsaufwand der Fügeteile zur Aufnahme des Reibungsringes bei der Montage erheblich.

Das Dokument US-A-4 854 141 offenbart eine Überlastsicherung nach dem Oberbegriff des Anspruchs 1 und ein Verfahren nach dem Oberbegriff des Auspruchs 6.

Der Erfindung liegt die Aufgabe zugrunde, eine gattungsgemäße Überlastsicherung bzw. ein Verfahren zu deren Herstellung dahingehend weiterzubilden, daß unter geringem Aufwand die Überlastsicherung hergestellt und in einfacher Weise der Reibschluß gezielt eingestellt werden kann.

Die Aufgabe ist erfindungsgemäß durch die Merkmale des Patentanspruches 1 hinsichtlich der Überlastsicherung und durch die Merkmale des Patentanspruches 6 hinsichtlich des Herstellungsverfahrens gelöst.

Dank der Erfindung kann durch die bei der Fügeverbindung erzielte Presspassung auf einen Reibungsring verzichtet werden, wodurch die Teilevielfalt der Überlastsicherung und somit des Zusammenbaus der Lenksäule reduziert wird, was eine Verminderung des Gewichtes nach sich zieht. Die gewünschte Preßpassung und damit die Überlastsicherung ist mit nur geringem Aufwand zu erreichen. Des weiteren werden die Herstellungskosten und der Herstellungsaufwand verringert, da eine mechanische Bearbeitung des inneren Fügeteils und/oder des äußeren Fügeteils zur Aufnahme eines Reibungsringes entfällt. Die Herstellung des jeweiligen Fügeteils und damit auch die der Überlastsicherung wird insoweit vereinfacht. Zudem unterbleibt die aufwendige Montage des Reibungsringes, der verschleißanfällig ist. Dies bedeutet wiederum eine Verbesserung der Langzeithaltbarkeit der Überlastsicherung. Die Stärke des für das Funktionieren der Überlastsicherung maßgeblich verantwortlichen Reibschlusses kann durch Variierung der Anpresskraft sehr gezielt und präzise auf den jeweiligen Anwendungsfall und Bedarf maßgeschneidert eingestellt werden. Insgesamt gesehen wird durch die Erfindung die Ausbildung eine höchst einfachen aber trotzdem in hohem Maße zuverlässigen und praktikablen Überlastsicherung an einer Fügeverbindung ermöglicht.

Zweckmäßige Ausgestaltungen der Erfindung können den Unteransprüchen entnommen werden; im übrigen ist die Erfindung anhand eines in der Zeichnung dargestellten Ausführungsbeispieles nachfolgend näher erläutert; dabei zeigt:
Fig. 1 ein äußeres Fügeteil eines Bauteils mit einer erfindungsgemäßen Überlastsicherung in einem seitlichen Längsschnitt,
Fig. 2 das Fügeteil aus Fig. 1 in einer Frontansicht,
Fig. 3 ein inneres Fügeteil eines Bauteils mit einer erfindungsgemäßen Überlastsicherung in einer seitlichen Ansicht,
Fig. 4 einen Ausschnitt des inneren Fügeteils von Fig. 3 in einem seitlichen Längsschnitt,
Fig. 5 das gefügte Bauteil mit der erfindungsgemäßen Überlastsicherung nach Herstellung der Fügeverbindung zwischen dem äußeren Fügeteil nach Fig. 1 und dem inneren Fügeteil nach Fig. 3 in einem seitlichen Längsschnitt,
Fig. 6 das gefügte Bauteil mit der erfindungsgemäßen Überlastsicherung endbearbeitet.

In Fig. 1 ist ein äußeres Fügeteil 1 eines Bauteils mit einer Überlastsicherung an einer Fügeverbindung dargestellt, welches eine Durchgangsöffnung 2 aufweist und radiale Stege 3 besitzt, die entlang der Längserstreckung des Fügeteils 1 verlaufen und in Umfangsrichtung versetzt zueinander angeordnet sind (Fig. 2). Das äußere Fügeteil 1 bildet im hier gezeigten Anwendungsfall einen Schließring,.der mit dem Sperrglied eines Lenkradschlosses zusammenwirkt, wobei die Überlastsicherung in eine Sicherungseinrichtung gegen die unbefugte Benutzung von Fahrzeugen integriert ist. Der Schließring ist in einfacher Weise als hülsenförmiges Strangpreßprofil ausgeführt, das als Massenteil von einem Endlosprofil abgelängt ist. Aufgrund der Erfindung erfordert die Verwendung des Strangpreßprofils keine aufwendige Nachbearbeitung. Der Schließring besitzt am Außenumfang 4 zwischen den Stegen 3 axial verlaufende Eingriffsrillen 5, in die das Sperrglied des Lenkradschlosses arretierend eingreifen kann. Das äußere Fügeteil 1 kann alternativ zur Strangpressung auch fließgepreßt oder aus einer geradlinigen zylindrischen Ausgangsform in eine mit Eingriffsrille 5 ausgestaltete Endform innenhochdruckumgeformt sein. Letzteres Verfahren ist dann günstig, wenn es auf die genaue Außenkontur ankommt, beispielsweise bei einem garantiert verklemmungsfreien Eingriff des Sperrgliedes des Lenkradschlosses in die Eingriffsrillen 5.

Das Bauteil, das hier beispielsweise eine Lenksäule bildet, weist des weiteren in der Fügeverbindung ein zylindrisches inneres Fügeteil 6 (Fig. 3) auf, das eine Lenkspindel der Lenksäule darstellt. Das Fügeteil 6 ist hohl und deshalb gegenüber massiven Ausführungen von geringem Gewicht bei gleichzeitiger Gewährleistung hoher Steifigkeit. Am inneren Fügeteil 6 sind an einem Ende 7 mehrere Einstiche 8 und konische Flächen 9 für die Anbindung der Lenkspindel an das Lenkgetriebe ausgeformt (Fig. 4). Die Lenkspindel, also das hohle innere Fügeteil 6, kann selbst ein Innenhochdruckumformteil sein, wobei ein geradliniges zylindrisches Rohr in ein Gesenk eingelegt wird und unter hohem fluidischen Innendruck gemäß der Gravurform des Gesenkes in seine vorläufige Endform gemäß Fig. 3 bzw. 4 aufgeweitet wird.

Das innere Fügeteil 6 wird gemäß Fig. 5 nun in die Durchgangsöffnung 2 des äußeren Fügeteils 1 hineingeschoben, so daß das innere Fügeteil 6 das äußere Fügeteil 1 durchragt. Danach werden die beiden Fügeteile 1 und 6 in dieser Schiebelage miteinander verpreßt. Das Verpressen kann durch Aufschrumpfen des äußeren Fügeteils 1 auf das innere Fügeteil 6 geschehen oder aber in vorteilhafter Weise ohne Wäremenergieeinfluß durch Aufweiten des inneren Fügeteils 6 erfolgen, wobei der an der Stelle der zu bildenden Preßpassung gelegene Abschnitt 11 des inneren hohlen Fügeteils 6 gegenüber dem in etwa gleichbleibenden Durchmesser der Durchgangsöffnung 2 des äußeren Fügeteils 1 plastisch aufgeweitet und an die Innenseite 10 des nach der Aufweitung elastisch rückfedernden äußeren Fügeteils 1 angepreßt wird. Das Fügeteil 6 liegt somit mit seinem Außenumfang am Innenumfang der Durchgangsöffnung 2 des äußeren Fügeteils 1 an. Das Aufweiten kann durch Räumen oder Aufdornen der entsprechenden Stelle des inneren Fügeteils 6 bewerkstelligt werden.

Eine schnelle und prozeßsichere als auch genauso exakt den Reibschluß reproduzierende Methode zur Aufweitung ist das Verfahren der partiellen Innenhochdruckumformung. Dabei wird eine Aufweitlanze in den Hohlraum des inneren Fügeteils 6 geschoben, wobei in der Aufweitlanze ein Axialkanal zur Führung eines unter Hochdruck stehenden fluidischen Mittels verläuft, welcher eine Radialbohrung besitzt, die an der Stelle der herzustellenden Aufweitung positioniert wird. Die Radialbohrung ist durch zwei zu beiden Seiten des Bohrungsaustritts am Aufweitlanzenumfang angeordneten Radialdichtungen hochdruckfest (> ca. 500 bar) in beide Axialrichtungen abgedichtet. Das heißt, daß durch den Innenhochdruck nur die Stelle des inneren Fügeteils 6 beaufschlagt wird, die zwischen den beiden Radialdichtungen liegt. Durch Steuerung des Fluidhochdruckes kann höchst präzise der Anpreßdruck und somit die Stärke des Reibschlusses je nach Bedarf, natürlich im Rahmen der Bruchdehnung des inneren Fügeteils 6 und der Umformelastizität des äußeren Fügeteils 1 eingestellt werden. Das innere Fügeteil 6 weitet sich also plastisch auf bis es zur umfänglichen festen Anlage an der Innenseite 10 des äußeren Fügeteils 1 kommt. Das äußere Fügeteil 1 weitet sich momentan zwar auch auf, jedoch nur im elastischen Bereich, so daß nach der Entspannung des Druckes das Material des äußeren Fügeteils 1 elastisch zum plastisch aufgeweiteten inneren Fügeteil 6 hinfedert, wodurch ein hoher Reibschluß zwischen Fügeteilen 1 und 6 gegeben ist.

Der örtlichen Ausbildung des Reibschlusses können mehrere Alternativen zu Grunde liegen. Zum einen kann der Reibschluß lokal nur punktuell ausgebildet sein, wozu das innere Fügeteil 6 an zumindest einer Axialposition innerhalb der Erstreckung des äußeren Fügeteils 1 umlaufend an das äußere Fügeteil 1 angepreßt wird, was die Herstellung insbesondere bei einem Aufweitverfahren - angewandt auf das innere Fügeteil 6 - besonders schnell macht. Zum anderen kann das innere Fügeteil 6 entlang des gesamten axialen Erstreckungsbereiches der Durchgangsöffnung 2 des äußeren Fügeteils 1 aufgeweitet sein. Hierbei ist der Halt des äußeren Fügeteils 1 auf dem Fügeteil 6, also der Fügeverbindung überhaupt, hinsichtlich seiner Dauerfestigkeit vorteilhaft, da an der Fügeverbindung angreifende Drehmomente breit über die Erstreckung des äußeren Fügeteils 1 verteilt werden. Des weiteren ist es denkbar, die Fügeteile 1 und 6 in einem geschlossenen Innenhochdruckumformwerkzeug zu fügen. Hierbei können nicht nur der an der Stelle der herzustellenden Preßpassung gelegene Abschnitt 11 des inneren Fügeteils 6, sondern auch die Abschnitte 12, die außerhalb des äußeren Fügeteils 1 liegen, aufgeweitet werden. Dadurch ergibt sich für das äußere Fügeteil 1 eine in axialer Richtung formschlüssige Einbettung in das innere Fügeteil 6 und somit ein besonders guter rutschfester axialer Halt. Falls sich die Aufweitung nur auf die Überlappstrecke des inneren Fügeteils 6 mit dem äußeren Fügeteil 1 beschränkt, kann eine gegenüber der zuletzt erwähnten Variante bauraumsparende Fügeverbindung bzw. Bauteilausbildung erreicht werden. Ein geschlossenes Innenhochdruckumformwerkzeug ist hierzu nicht erforderlich, so daß der Einsatz der oben genannten Aufweitlanze genügt.

Nach der Ausbildung der gewünschten erfindungsgemäßen Presspassung wird im Falle der Beaufschlagung mit Innenhochdruck dieser entspannt und die Aufweitlanze aus dem inneren Fügeteil gezogen. In der Anwendung der Fügeverbindung bei einer Lenksäule wird gemäß Fig. 6 das dem Lenkgetriebe abgewandte lenkradnahe Ende 13 entsprechend zur Montage des Lenkrades an der Lenkspindel endbearbeitet, in dem das Ende 13 eingezogen wird und umfänglich geriffelt wird.

Die Überlastsicherung an der geschilderten Fügeverbindung wirkt im Beispiel der Lenkspndel folgendermaßen. Das drehmomentbeaufschlagte Fügeteil 6, die Lenkspindel, ist mit dem Schließring, dem äußeren Fügeteil 1, durch die Verpressung unmittelbar miteinander reibschlüssig verbunden. Wird nun im Schließzustand des Lenkradschlosses, bei dem ein Sperrglied in eine Eingriffsrille 5 des Schließringes eingreift, das Lenkrad - und damit verbunden die Lenkspindel - gedreht, so wirkt dem Drehmoment der Lenkspindel über den Sperrwiderstand des in den Schließring eingreifenden Sperrgliedes ein zu diesem gleichgroßes Drehmoment entgegen. Um nun zu vermeiden, daß bei einem zu hohen Drehmoment die Lenkspindel verformt oder in anderer Weise beschädigt wird und somit zur Weiterverwendung im Fahrbetrieb für den rechtmäßigen Fahrzeugführer unbrauchbar wird, ist der Reibschluß zwischen Lenkspindel und Schließring, derart eingestellt, daß sich bei Übersteigen eines der maximal zulässigen Reibkraft entsprechenden Drehmomentwertes der Reibschluß löst und die Lenkspindel in der Verbindung durchrutscht. Hierbei sei noch einmal angemerkt, daß durch die hochgenau kontrollierbare Druckregulierung des Innenhochdruckes sich in vorteilhafter Weise der passende maximale Drehmomentwert sehr exakt einstellen und ebenso in einfacher Weise - mit nur einem Werkzeug und nur über die Druckregulierung - auf vielfältige Anwendungszwecke breit variieren läßt. Die Lenkspindel liegt somit am Schließring mit einer dem vorbestimmten Drehmomentwert entsprechenden Vorspannkraft an. Der hierbei ermittelte Drehmomentwert für Lenkspindelanwendungen liegt im Bereich zwischen 120 und 190 Nm. Unterhalb 120 Nm würde die Lenkspindel in unerlaubter Weise zu leichtgängig sein und über 190 Nm nimmt die Lenkspindel wie erwähnt Schaden.

Das Anwendungsfeld für die erfindungsgemäße Überlastsicherung ist als sehr breit anzusehen. Hierbei können alle Fügeverbindungen auf rohrförmigen Grundkörpern, beispielsweise bei Achsen, Wellen und Trägern, in Betracht gezogen werden, die bei einer definierten Belastung durchrutschen müssen.

## Patentansprüche

1. Überlastsicherung an einer Fügeverbindung, welche aus einem äußeren Fügeteil mit einer Durchgangsöffnung und einem zylindrischen inneren drehmomentbeaufschlagten Fügeteil besteht, das die Durchgangsöffnung des äußeren Fügeteil durchragt und mit diesem reibschlüssig verbunden ist, wobei am äußeren Fügeteil ein zum Drehmoment des inneren Fügeteils gleichgroßes Gegendrehmoment wirkt, derart, dass sich bei Übersteigen eines der maximal zulässigen Reibkraft entsprechenden Drehmomentwertes der Reibschluss löst und das innere Fügeteil in der Verbindung durchrutscht, und wobei das innere Fügeteil mit dem äußeren Fügeteil eine Presspassung ausbildet und mit seinem Außenumfang am Innenumfang der Durchgangsöffnung des äußeren Fügeteils mit einer Vorspannkraft anliegt,
**dadurch gekennzeichnet,**
**dass** der innere hohle Fügeteil (6) in der mit dem äußeren Fügeteil (1) Presspassung gegenüber seinem Zustand in der unverpressten Schiebelage plastisch aufgeweitet ist und dass der äußere Fügeteil (1) in der Presspassung elastisch aufgeweitet ist, wobei der innere Fügeteil (6) am äußeren Fügeteil (1) mit einer dem Drehmomentwert entsprechenden Vorspannkraft anliegt.

2. Überlastsicherung nach Anspruch 1,
**dadurch gekennzeichnet,**
**dass** der an der Stelle der Presspassung gelegene Abschnitt (11) des inneren Fügeteils (6) gegenüber den außerhalb des äußeren Fügeteils (1) liegenden Abschnitten (12) aufgeweitet ist.

3. Überlastsicherung nach einem der Ansprüche 1 oder 2,
**dadurch gekennzeichnet,**
**dass** das innere Fügeteil (6) entlang der gesamten axialen Erstreckung der Durchgangsöffnung (2) des äußeren Fügeteils (1) aufgeweitet ist.

4. Überlastsicherung nach einem der Ansprüche 1 bis 3,
**dadurch gekennzeichnet,**
**dass** die Überlastsicherung in eine Sicherungseinrichtung gegen die unbefugte Benutzung von Fahrzeugen integriert ist, dass das äußere Fügeteil (1) ein mit dem Sperrglied eines Lenkradschlosses zusammenwirkender Schließring ist und dass das innere Fügeteil (6) von einer Lenkspindel einer Lenksäule gebildet ist.

5. Überlastsicherung nach Anspruch 4,
**dadurch gekennzeichnet,**
**dass** der Schließring ein hülsenförmiges Strangpressprofil mit am Außenumfang ausgebildeten, axial verlaufenden Eingriffsrillen (5) ist.

6. Verfahren zur Herstellung einer Überlastsicherung an einer Fügeverbindung, wobei ein inneres, zylindrisches drehmomentbeaufschlagtes Fügeteil in eine Durchgangsöffnung eines äußeren Fügeteils geschoben und mit diesem reibschlüssig verbunden wird, wobei ein Reibschluss zwischen dem inneren Fügeteil und dem äußeren Fügeteil, an dem ein zum Drehmoment des inneren Fügeteils gleichgroßes Gegendrehmoment wirkt, eingestellt wird, derart, dass sich bei Übersteigen eines der maximal zulässigen Reibkraft entsprechenden Drehmomentwertes der Reibschluss löst und das innere Fügeteil in der Verbindung durchrutscht, und wobei das innere Fügeteil mit dem äußeren Fügeteil mit einer Vorspannkraft des inneren Fügeteils am äußeren Fügeteil verpresst wird,
**dadurch gekennzeichnet,**
**dass** die Verpressung in Schiebelage der beiden Fügeteile (1 und 6) erfolgt, wobei der an der Stelle der zu bildenden Presspassung gelegene Abschnitt (11) des inneren hohlen Fügeteils (6) gegenüber dem in etwa gleichbleibenden Durchmesser der Durchgangsöffnung (2) des äußeren Fügeteils (6) plastisch aufgeweitet und an der Innenseite (10) des nach der Aufweitung elastisch rückfedernden äußeren Fügeteils (6) mit einer dem Drehmomentwert entsprechenden Vorspannkraft angepresst wird.

7. Verfahren nach Anspruch 6,
**dadurch gekennzeichnet,**
**dass** das innere Fügeteil (6) an zumindest einer Axialposition innerhalb der Erstreckung des äußeren Fügeteils (1) umlaufend mittels fluidischem Innenhochdruck aufgeweitet wird.

8. Verfahren nach einem der Ansprüche 6 oder 7,
**dadurch gekennzeichnet,**
**dass** das innere Fügeteil (6) entlang des gesamten axialen Erstreckungsbereiches der Durchgangsöffnung (2) des äußeren Fügeteils (1) aufgeweitet und an diesen angepresst wird.

9. Verfahren nach einem der Ansprüche 6 bis 8,
**dadurch gekennzeichnet,**
**dass** das innere Fügeteil (6) zusätzlich außerhalb des axialen Erstreckungsbereiches des äußeren Fügeteils (1) durch Innenhochdruck aufgeweitet wird.

10. Verfahren nach einem der Ansprüche 6 bis 9,
**dadurch gekennzeichnet,**
**dass** das äußere Fügeteil (1) stranggepresst oder fließgepresst wird.

11. Verfahren nach einem der Ansprüche 6 bis 10,
**dadurch gekennzeichnet,**
**dass** das äußere Fügeteil (1) aus einer geradlinigen zylindrischen Ausgangsform in eine mit Eingriffsrille (5) ausgestaltete Endform innenhochdruckumgeformt wird.

## Claims

1. Overload safety device on a joint connection, consisting of an outer joint part with an end-to-end orifice and a cylindrical inner joint part to which a torque is applied, which extends through the end-to-end orifice of the outer joint part and is joined thereto by a friction connection, wherein a counter-torque of the same magnitude as the torque of the inner joint part acts on the outer joint part so that the friction connection is released when a torque value corresponding to the maximum permissible friction force is exceeded and the inner joint part slips in the connection, and wherein the inner joint part forms a press fit with the outer joint part and sits with its external circumference against the internal circumference of the end-to-end orifice of the outer joint part with a pre-tensioning force,
**characterised in that**
the inner hollow joint part (6) is plastically expanded in the press fit with the outer joint part (1) relative to its state in the unpressed sliding position and the outer joint part (1) is elastically expanded in the press fit so that the inner joint part (6) lies against the outer joint part (1) with a pre-tensioning force corresponding to the torque value.

2. Overload safety device as claimed in claim 1,
**characterised in that**
the section (11) of the inner joint part (6) at the point of the press fit is expanded relative to the sections (12) lying outside the outer joint part (1).

3. Overload safety device as claimed in one of claims 1 or 2,
**characterised in that**
the inner joint part (6) is expanded along the entire axial extension of the end-to-end orifice (2) of the outer joint part (1).

4. Overload safety device as claimed in one of claims 1 to 3,
**characterised in that**
the overload safety device is integrated in a lock mechanism to prevent unauthorised use of motor vehicles and the outer joint part (1) is a locking ring cooperating with the locking member of a steering wheel lock and the inner joint part (6) is a steering spindle of a steering column.

5. Overload safety device as claimed in claim 4,
**characterised in that**
the locking ring is a sleeve-shaped extruded section with axially extending location grooves (5) on the external circumference.

6. Method of producing an overload safety device on a joint connection, wherein an inner, cylindrical joint part subjected to a torque is pushed into an end-to-end orifice of an outer joint part and joined thereto by a friction connection, wherein a friction connection is set between the inner joint part and the outer joint part, on which a counter-torque equal to the torque of the inner joint part acts so that the friction connection is released when a torque value corresponding to the maximum permissible friction force is exceeded and the inner joint part slips in the connection, and wherein the inner joint part is pressed together with the outer joint part by a pre-tensioning force of the inner joint part acting on the outer joint part,
**characterised in that**
the pressing takes place when the two joint parts (1 and 6) are in the inserted position and the portion (11) of the inner hollow joint part (6) at the point where the press fit is to be created is plastically expanded relative to the diameter of the end-to-end orifice (2) of the outer joint part (6), which remains essentially constant, and is pressed against the internal face (10) of the outer joint part (6), which elastically springs back after expansion, with a pre-tensioning force corresponding to the torque value.

7. Method as claimed in claim 6,
**characterised in that**
the inner joint part (6) is peripherally expanded at one axial position, at least, within the extension of the outer joint part (1) by means of fluid-induced internal high pressure.

8. Method as claimed in one of claims 6 or 7,
**characterised in that**
the inner joint part (6) is expanded along the region of the entire axial extension of the end-to-end orifice (2) of the outer joint part (1) and pressed against the latter.

9. Method as claimed in one of claims 6 to 8,
**characterised in that**
the inner joint part (6) is additionally expanded outside of the region of the axial extension of the outer joint part (1) by internal high pressure.

10. Method as claimed in one of claims 6 to 9,
**characterised in that**
the outer joint part is extruded or formed in an extrusion press.

11. Method as claimed in one of claims 6 to 10,
**characterised in that**
the outer joint part (1) is formed from an initially straight cylindrical shape into a final shape incorporating location grooves (5) by internal high pressure.

## Revendications

1. Limiteur de charge monté sur un assemblage de liaison qui se compose d'une pièce de liaison extérieure comprenant une ouverture de passage et d'une pièce de liaison intérieure cylindrique, sollicitée par un couple, laquelle pièce de liaison intérieure traverse l'ouverture de passage de la pièce de liaison extérieure et est reliée à celle-ci en étant entraînée par frottement, où il se produit, au niveau de la pièce de liaison extérieure, un couple antagoniste égal au couple de la pièce de liaison intérieure, de manière telle que l'entraînement par frottement se déclenche lors du dépassement d'une valeur de couple correspondant à la force de frottement maximale admissible, et la pièce de liaison intérieure glisse à travers l'assemblage, et où la pièce de liaison intérieure forme, avec la pièce de liaison extérieure, un ajustement sans jeu et, par sa circonférence extérieure, est en appui, avec une force de précontrainte, sur la circonférence intérieure de l'ouverture de passage de la pièce de liaison extérieure,
**caractérisé**
**en ce que** la pièce de liaison intérieure creuse (6) est élargie plastiquement dans l'ajustement sans jeu avec la pièce de liaison extérieure (1), par rapport à son état dans la position de poussée non comprimée, et
**en ce que** la pièce de liaison extérieure (1) est élargie élastiquement dans l'ajustement sans jeu, où la pièce de liaison intérieure (6) est en appui sur la pièce de liaison extérieure (1), avec une force de précontrainte correspondant à la valeur de couple.

2. Limiteur de charge selon la revendication 1, **caractérisé en ce que** la partie (11) de la pièce de liaison intérieure (6), placée au niveau de l'emplacement de l'ajustement sans jeu, est élargie par rapport aux parties (12) se trouvant à l'extérieur de la pièce de liaison extérieure (1).

3. Limiteur de charge selon la revendication 1 ou 2, **caractérisé en ce que** la pièce de liaison intérieure (6) est élargie le long de toute l'étendue axiale de l'ouverture de passage (2) de la pièce de liaison extérieure (1).

4. Limiteur de charge selon l'une quelconque des revendications 1 à 3, **caractérisé en ce que** le limiteur de charge est intégré à un dispositif de sécurité pour empêcher l'utilisation non autorisée de véhicules, **en ce que** la pièce de liaison extérieure (1) est une bague de fermeture fonctionnant en coopération avec l'élément de blocage d'un antivol de direction, et **en ce que** la pièce intérieure de liaison (6) est formée par un arbre de direction d'une colonne de direction.

5. Limiteur de charge selon la revendication 4, **caractérisé en ce que** la bague de fermeture est un profilé extrudé en forme de manchon comprenant des rainures d'engagement (5) conformées au niveau de la circonférence extérieure et s'étendant axialement.

6. Procédé de fabrication d'un limiteur de charge monté sur un assemblage de liaison, où une pièce de liaison intérieure, cylindrique et sollicitée par un couple est poussée dans une ouverture de passage d'une pièce de liaison extérieure et reliée à celle-ci par entraînement dû au frottement, où un entraînement par frottement se produisant entre la pièce de liaison intérieure et la pièce de liaison extérieure, au niveau de laquelle il se produit un couple antagoniste égal au couple de la pièce de liaison intérieure, est réglé de manière telle, que l'entraînement par frottement se déclenche lors d' un dépassement d'une valeur de couple correspondant à la force de frottement maximale admissible, et la pièce de liaison intérieure glisse à travers l'assemblage, et où la pièce de liaison intérieure est comprimée par la pièce de liaison extérieure, avec une force de précontrainte de la pièce de liaison intérieure s'appliquant sur la pièce de liaison extérieure,
**caractérisé**
**en ce que** la compression se produit en position de poussée des deux pièces de liaison (1 et 6), où la partie (11) de la pièce de liaison intérieure creuse (6), placée au niveau de l'emplacement de l'ajustement sans jeu devant se former, est élargie plastiquement par rapport au diamètre - à peu près constant - de l'ouverture de passage (2) de la pièce de liaison extérieure (6) et, au niveau du côté intérieur (10) de la pièce de liaison extérieure (6), sous l'effet d'un retour élastique se produisant après l'élargissement, est comprimée par une force de précontrainte correspondant à la valeur de couple.

7. Procédé selon la revendication 6, **caractérisé en ce que** la pièce de liaison intérieure (6), au moins au niveau d'une position axiale placée à l'intérieur de l'étendue de la pièce de liaison extérieure (1), est élargie de façon circulaire, au moyen d'une haute pression intérieure fluidique.

8. Procédé selon la revendication 6 ou 7, **caractérisé en ce que** la pièce de liaison intérieure (6) est élargie le long de toute la zone d'étendue axiale de l'ouverture de passage (2) de la pièce de liaison extérieure (1) et comprimée contre celle-ci.

9. Procédé selon l'une quelconque des revendications 6 à 8, **caractérisé en ce que** la pièce de liaison intérieure (6) est élargie en outre à l'extérieur de la zone d'étendue axiale de la pièce de liaison extérieure (1), par une haute pression intérieure.

10. Procédé selon l'une quelconque des revendications 6 à 9, **caractérisé en ce que** la pièce de liaison extérieure (1) est extrudée ou filée.

11. Procédé selon l'une quelconque des revendications 6 à 10, **caractérisé en ce que** la pièce de liaison extérieure (1) est transformée sous l'effet d'une haute pression intérieure, passant d'une forme initiale cylindrique droite, à une forme finale conformée en comportant des rainures d'engagement (5).
